## Europäisches Patentamt
## European Patent Office
## Office européen des brevets

(19)

(11) Publication number: **0 055 834**
**A2**

# EUROPEAN PATENT APPLICATION

(12)

(21) Application number: 81110276.3

(22) Date of filing: 09.12.81

(51) Int. Cl.³: **H 04 N 1/40**

(30) Priority: 02.01.81 US 222103

(43) Date of publication of application:
14.07.82 Bulletin 82/28

(84) Designated Contracting States:
DE FR GB IT

(71) Applicant: International Business Machines Corporation

Armonk, N.Y. 10504(US)

(72) Inventor: Fox, Sidney Jard
5160 Ingersoll Place
Boulder Colorado 80303(US)

(72) Inventor: Yeskel, Filip Jay
5421 White Place
Boulder Colorado 80303(US)

(72) Inventor: Zimmermann, William John
8113 Meadowlake Drive
Longmont Colorado 80501(US)

(74) Representative: Lewis, Alan John
IBM United Kingdom Patent Operations Hursley Park
Winchester, Hants, S021 2JN(GB)

(54) Reprographic apparatus capable of reproducing various tone and line originals and methods of operation thereof.

(57) A document scanner 10 scans a document to be reproduced and the serial output data (PEL's) is provided to a system controller 30 and to an input buffer means 14. The controller 30 provides control signals on line 50 to a print decision multiplexor 48 which can receive inputs on lines 44, 46, 54. The input on 54 is selected when a line copy algorithm is to be used to control printing, the input on line 44 when a continuous tone print algorithm is to be used to central printing and the input on line 46 is to be used when a third algorithm is to be used suitable for areas of an original not clearly continuous tone or line tone. The appropriate line 44, 46, 54 is selected in accordance with the sequence of data representing the original. For this purpose gradient logic means 26 is connected by busses 16, 18, 20, 22, 24 to selected storage positions of the buffer means 14 and generates a gradient signal on line 28 for each PEL. Similarly look ahead logic means 32 are connected by busses 20', 22', 24' to selected storage positions of the buffer means 14. The look ahead means 32 provide signals on lines 34, 36 indicative of whether any selected storage position respectively holds a white valued or black valued PEL. In addition hysteresis counters 40 provide signals on lines 58 through 96 indicative of the preceding operational mode and/or preced-

ing PEL values. Latches 104, 106, 108, 110 provide respectively reference signals indicative of a white threshold level, a black threshold level, a threshold level usuable for line copy and a datum gradient value. The system controller 30 is a data processor and is operative to correlate the signals supplied to it and to generate control signals for the multiplexor block 48.

./...

EP 0 055 834 A2

FIG. 1

REPROGRAPHIC APPARATUS CAPABLE OF REPRODUCING
VARIOUS TONE AND LINE ORIGINALS AND
METHODS OF OPERATION THEREOF

The invention relates to reprographic apparatus capable of reproducing
various tone and line originals and methods of operation thereof. The
invention is particularly concerned with automatic systems for processing
pixels representative of mixed format documents containing both text
(line copy) material and photographic (continuous tone) material.

The processing of documents for electronic copying and/or facsimile
transmission is well known in the prior art. The processing of documents
includes the steps of scanning the document and generating a video
stream of pixels (picture elements). The pixels are the electronic
representation of the informational contents of the document. The video
stream of data is next thresholded and is printed.

The prior art abounds with scanners suitable for generating video
streams of pixels. Generally, the pixels are generated by reflectively
scanning the document. By way of example, U.S. Patent 4,146,786 is
representative of the prior art. In the patent, a plurality of linear
sensor arrays are used to scan a line of data on an original document.

Generally, text material and continuous tone material are thresholded
with different thresholders suitably optimized to take advantage of
their different characteristics. Text material is optimized by a
thresholding technique which results in sharp edge definition, high
contrast and high frequency detail rendition. Examples of prior art are
thresholding the video against a single fixed threshold approximately
midway between black and white and variations of this used in facsimile,
an example of which is given in U.S. Patent 3,723,649. Continuous tone
material is optimized by a thresholding technique which results in good
gray scale reproduction and only moderate detail rendition. Examples in
the prior art are so-called "matrix thresholding" which includes a
matrix of different thresholding values repeated periodically across the document and so-called "error diffusion." The thresholding techniques optimized for one type of material generally yield results which are marginal to poor on the other type of material.

Attempts have been made to switch between thresholders optimized to text or continuous tone reproduction based on local information surrounding the pixel of interest. Examples in the prior art are U.S. Patents 3,294,896 and 2,255,408. Generally, these fall into two classes; switching determined by gradient or frequency and switching determined by video level.

U.S. Patent 3,294,896 is an example of the latter. In the method taught by this patent, signals developed by a photocell are passed through a two-level threshold network. Signals above the upper threshold are transmitted as black and signals below the lower threshold are transmitted as white. Signals falling between the two levels are transmitted as gray and represented by the results of thresholding by a continuous tone thresholder.

U.S. Patent 2,255,408 is an example of gradient or frequency switching. High frequency changes in reflectance are assigned to text thresholders and low frequency changes in reflectance are assigned to continuous tone thresholders.

Both of the above methods are inadequate for high quality reproduction of mixed format documents. The former fails in the transition regions on the edge of text and the latter in the flat middle sections of text characters. Avoidance of this degradation in text reproduction results in severely truncating the gray scale range of the continuous tone reproduction.

U.S. Patent 3,622,698 describes a facsimile system which can be manually controlled depending on whether the document being scanned is text or photograph. A switch is provided for an operator to adjust, based on

- 3 -

the format of the document. The control is achieved by changing the threshold and saturation level of the transmitted signal.

It is therefore the object of the present invention to provide a mode-switching device which processes documents of a mixed format in a more efficient manner than was heretofore possible without manual intervention and without requiring full page preprocessing.

It is another object of the present invention to provide an improved mode-switching device.

It is yet another object of the present invention to provide an automatic mode-switching apparatus which processes video data in accordance with a series of processing steps and selects an optimum thresholding device for thresholding text or continuous tone material so as to ensure the fullest range of gray scale reproduction capability for the latter without sacrificing contrast and edge definition of the text material.

The invention provides a method of reproducing an original represented by a serial stream of digital data, each item of data having a PEL value corresponding to the value of a surface characteristic (e.g. reflectance) of the elemental area (PEL) of the original represented by the item of data, said method comprising selecting items of data having grey PEL values between predetermined white and black threshold values and being characterised by determining, at least for each selected item of data, whether any item of data in a group of items of data corresponding to a group of elemental areas (PEL's) of the original contiguous with the elemental area (PEL) corresponding to the selected item of data, has a PEL value other than a grey PEL value, and if so, operating the apparatus according to a first algorithm and, if not, operating the apparatus according to a second algorithm.

The invention also provides apparatus for reproducing an original represented by a serial stream of digital data, each item of data having a PEL value corresponding to the value of a surface characteristic (e.g. reflectance) of the elemental area (PEL) of the original represented by the item of

- 4 -

data, said apparatus being capable of operating in more than one mode to produce copies of different or mixed nature (e.g. half tone, line or printed) originals and comprising buffer means for receiving and buffering the serial stream of data; means for comparing the value of each item of data with first and second threshold values and operable to generate contrast signals indicative of whether the PEL value is greater than the first threshold value, between the threshold values, or below the second threshold value; first means effective in operation to cause the apparatus to operate in a first mode according to a first algorithm; second means effective in operation to cause the apparatus to operate in a second mode according to a second algorithm; and selection means, connected to receive the contrast signals, and operative selectively to render the first or second means operative, said apparatus being characterised by further comprising look ahead means connected to receive the PEL values successively stored in a first group of buffer positions and operative to generate a succession of selection signals indicative of whether any PEL value in each group lies in the band of values between the first and second threshold values or outside that band, each selection signal being associated with the PEL value occupying a particular location in the first group, being supplied to the selection means and being used by the selection means in selecting the operational mode of the apparatus.

The invention further provides a method of reproducing an original represented by a serial stream of digital data, each item of data having a value corresponding to the value of a surface characteristic (e.g. reflectance) of the elemental area (PEL) of the original represented by the item of data, said method comprising selecting items of data having grey values between predetermined white and black threshold values; determining, at least for each selected grey valued item of data, a gradient value dependent on the rate of change of the surface characteristic in a region of the original contiguous to the PEL corresponding to the item of data; comparing each determined gradient value with a predetermined gradient value; and using the result of the comparison in the selection of an operational mode, from a plurality of operational modes, for reproducing the original, and said method being characterised in that,

0055834

- 5 -

when the determined gradient value for a subject item of data bears a
first predetermined relationship to the predetermined gradient value,
the operational mode is further selected by determining whether the
values of all the items of data corresponding to elemental areas of the
orignal in a predetermined area contiguous with the subject elemental
area lie in the range between the predetermined white and black threshold
values or whether any item of that data has a value outside that range,
and selecting one or other of two alternative operational modes according
to the result of the determination.

The preferred embodiment of a mode-switching device of the present
invention utilizes gradient, level and hysteresis information to determine
the optimum thresholding device for processing a particular type of
data.

The embodiment of the mode-switching device includes an input buffer
storage means. The storage means is preferably configured as a serial
memory and stores approximately five lines of storage. For each pixel
of interest, a gradient logic means determines the gradient of surrounding
pixels. The gradient logic means generates a gradient signal representative
of the gradient for the pixel of interest.

A look-ahead logic means comprised in the preferred embodiment generates
a look-ahead signal representative of the reflectance characteristics of
pixels downstream from the pixel of interest. The look-ahead signal
gives an indication of the type of data following the pixel of interest.
A plurality of latches store a plurality of machine state signals. The
machine state signals correspond with a desired reflectance range of a
document to be printed. The machine state signals can be changed
periodically. A controller, including an algorithm, correlates the
level signals, the gradient signals and the look-ahead signals to output
a print/no-print decision signal.

- 6 -

The invention will now be more particularly described with reference to the accompanying drawings, in which:-

FIG. 1 shows, in block diagram form, one embodiment of a mode-switching device according to the present invention.

FIG. 2 shows a graphical representation for a scan line of a portion of a word for a line copy document.

FIG. 3 shows a graphical representation for the video values of the scan line of FIG. 2.

FIG. 4 shows a document and the direction of scan and processing.

FIG. 5 shows a graphical representation of the technique used by the gradient logic to calculate gradient.

FIG. 6 shows a graphical representation of the technique used by the look-ahead logic to calculate look-ahead information.

FIG. 7 is a graphical representation of a scan line for a continuous tone document.

FIG. 8 represents the digitized video values for the document of FIG. 7.

FIG. 9 shows a flowchart used to process the pixels generated from a document according to the embodiment of FIG. 11.

FIG. 10 shows a flowchart used to process a document according to the embodiment of FIG. 1.

FIG. 11 shows, in block diagram form, another, simplified, embodiment of a mode-switching device according to the present invention.

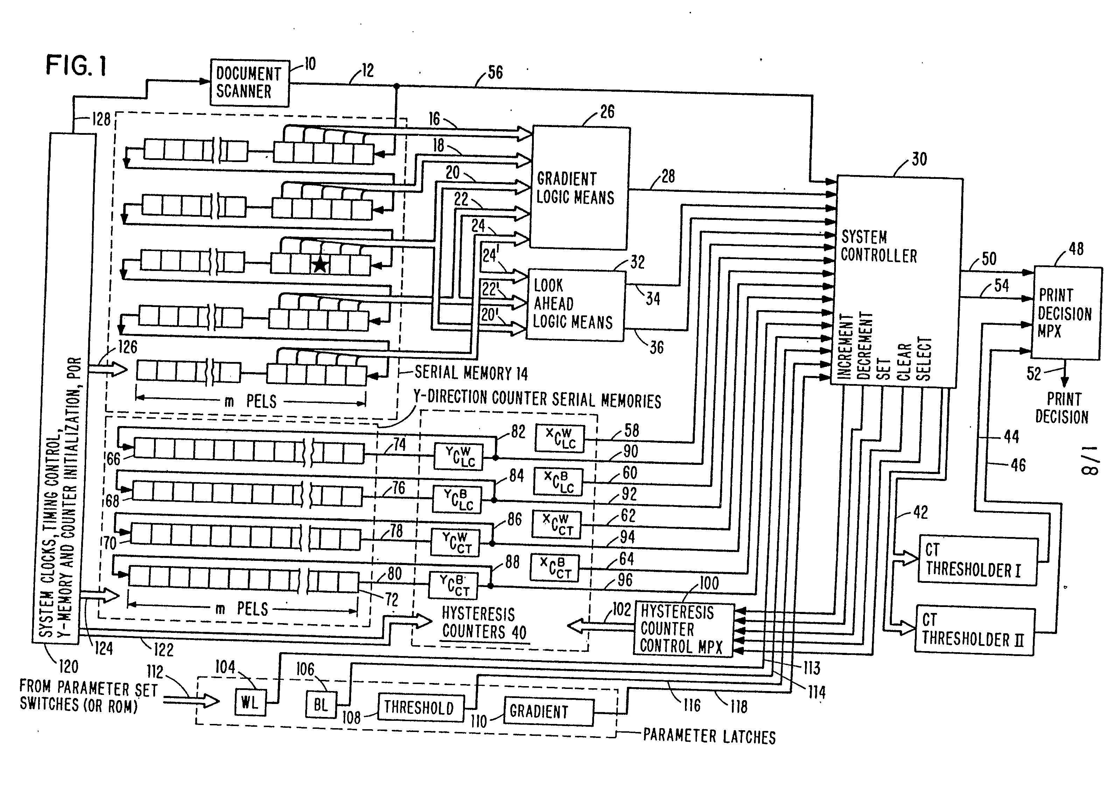

FIG. 1 shows in block diagram form a mode-switching device according to the teaching of the present invention. The device scans a mixed format document, selects an optimum thresholder for processing the data, and generates print/no-print decisions for driving a bilevel reproducing device such as an ink jet printer. The mode-switching device includes a conventional document scanner 10. The document scanner is fitted with a transparent document platen upon which the document to be reproduced is placed. The scanner further includes illumination means, optical means and a plurality of photosensitive elements. Each are coupled in a conventional or well-known manner and will not be described in detail. Suffice it to say, each photosensitive element outputs a video signal representative of an elementary piece of information recorded on the document. The output from the photosensitive element is referred to in the art as a picture element (PEL) or pixel. The PELs representing the scan data are fed over conductor 12 into storage means 14. The conductor 12 includes a plurality of simplex bit lines with each bit line carrying one bit of information. The bit lines are configured so that N bit lines are needed to carry information for a single PEL (N bits/PEL). Although the storage means 14 may include a plurality of different types of prior art storage, in the preferred embodiment of this invention, the storage means is configured as a serial memory with five lines of storage. Each line stores M PELs. With this configuration, data which is outputted on conductor 12 is rippled through the various stages of the first line storage into the second line storage then into the third line storage and so on. It should be noted that other types of configurations can be used without departing from the teaching and scope of the present invention.

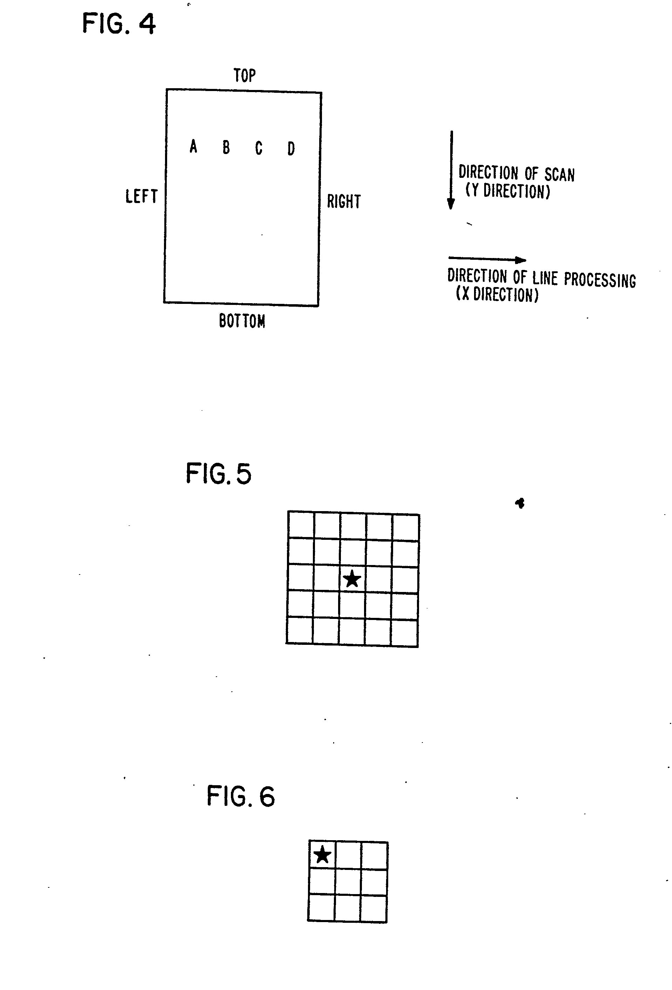

The first five shift register stages associated with each of the line storages are fed over multiplexor busses 16, 18, 20, 22 and 24, respectively, into gradient logic means 26. As will be explained in more detail, the function of the gradient logic means is to interrogate the adjoining PELs and determine the gradient associated with a particular PEL of interest. Turning to FIG. 5, for the moment, is a chart showing one preferred method used to calculate the gradient associated with a particular

- 8 -

PEL, hereinafter called the PEL of interest.  Other methods for determining a gradient, i.e., a measure of the rate of change of the information, may also be used.  Suppose that the PEL of interest is the PEL identified by the "star" in FIG. 5 and the "star" in storage means 14 (FIG. 1). Since each PEL is rippled through the shift register or serial memory stages at some point in time, every PEL outputted from the scanner will be a PEL of interest.  As such, every PEL outputted from the scanner is processed according to the teaching of the present invention.  Each of the square areas in FIG. 5 represents a PEL in the five line serial memory storage means.  Each of the boxes are filled with numbers, say 0-15.  The number represents the gray scale value assigned to a PEL.  Of course, any other gray scale range may be used without departing from the scope of the invention.  For discussion purposes, assuming the box containing the star is the PEL of interest whose gradient is to be identified.  The gradient is determined in accordance with the following equation:

$$GRAD=MAX-MIN$$

Where GRAD represents the gradient of the PEL of interest.

MAX represents the maximum gray scale value in the area of interest.

MIN represents the minimum gray scale value in the area of interest.

By way of example, if the maximum gray scale value in the boxes of FIG. 5 was 15 and the minimum value was 3, then the gradient for the PEL of interest is 15-3=12.  Although a five-by-five matrix is here used to calculate the gradient associated with the PEL of interest, this should be construed as illustrative, and does not limit the scope of the present invention.  Once the gradient for each PEL is determined, it is fed over conductor 28 (FIG. 1) into the system controller 30.  N bit lines per PEL are used to transport the gradient information over conductor 28 into the system controller.

A look-ahead logic means 32 is coupled over multiplexor busses 24', 22' and 20' to the storage means 14. In the preferred embodiments of this invention, a three-by-three matrix is used to calculate the look-ahead information. As with the gradient logic means, any other type of logic means may be used to generate the look-ahead information. The function of the look-ahead logic is to interrogate PELs following the PEL of interest and to generate a signal representative of the type of data. Turning to FIG. 6 for the moment, is a graphical representation of the method used to calculate the look-ahead information. For description purposes, assuming that the starred box is the PEL of interest, there are two types of look-ahead information: look-ahead black (LAB) and look-ahead white (LAW). LAB is true if any PEL in the 3x3 look-ahead matrix is greater than or equal to the white level threshold value (WL). LAW is true if any PEL in the look-ahead area is less than or equal to the black level threshold value (BL).

Turning now to FIG. 1, the look-ahead white (LAW) information is a one-bit signal outputted on conductor 34. Similarly, the look-ahead black (LAB) information is a one-bit signal outputted on conductor 36. The data on conductors 34 and 36 is fed into system controller 30.

The function of system controller 30 is to correlate the signal outputted from the gradient logic means, the look-ahead logic means and the hysteresis counter 40 to select an optimum thresholder for processing the data outputted from the document scanner 10. The correlation of signals is performed in accordance with a predetermined series of process steps or algorithm. The algorithm or series of process steps will be described shortly. Note that information needed by the continuous tone thresholders (such as PEL gradient, gray value, etc.) is passed over buss 42 to continuous tone thresholder 1(CT Thresholder I) and continuous tone thresholder 2 (CT Thresholder II). These continuous tone thresholders are, in one embodiment, conventional thresholders of the matrix type, well known in the prior art, and therefore their detail will not be described here. Suffice it to say that if the data being processed is doubtful as to whether or not a continuous tone thresholder or a text type thresholder should be used, then the continuous tone thresholder II, which is line copy biased (LC biased) is used. In addition, any other continuous tone thresholding techniques known in the art can be used in place of matrix thresholding.

A one-bit line 44 and 46, respectively, is outputted from the thresholders into print decision multiplexor (MPX) block 48. The function of the print decision multiplexor block 48 is to determine under the control of a two-bit select line 50 whether the data which is used as the one-bit print decision line 52 should be taken from conductor 44, 46 or 54. The signal on conductor 54 is valid when the system controller 30 determines that a line copy thresholder (also called Text Type Thresholder) is to process the data. The gray scale value of data is also fed over conductor 56 into the system controller 30.

The other set of signals which is used by the system controller 30 is the signal outputted from the hysteresis counters 40. There are two sets of counters in the preferred embodiment of this invention. There is the X set of counters and the Y set of counters. The X set of counters stores hysteresis information relative to the X direction of processing. Likewise the Y set of counters stores information relative to the Y direction of processing (FIG. 4). It is worthwhile noting at this point, that the present invention is capable of handling mixed mode documents containing line copy (that is textual material) and/or continuous tone material (that is photographs). Also, the reflectance characteristics of line copy may either be black representing the informational contents of the page, or white representing background information. Similarly, the continuous tone (CT) material may be white representing background or black (gray) representing the informational contents of the page. To this end, there are two counters for storing hysteresis information relative to line copy black or line copy white. Similarly, there are two counters for storing continuous tone information white or continuous tone information black. The output from each of the four X counters are fed over conductors 58, 60, 62, and 64 into system controller 30. The signal on conductors 58, 60 and 62 is a four-bit hysteresis count. The signal on conductor 64 is a one-bit hysteresis flag. The hysteresis counts and flags record the past history of the information being processed.

There are also four Y counters. The Y counters keep track of hysteresis associated with scanned data in the Y direction. Two of the counters are used for keeping hysteresis information of line copy (LC) in the Y direction. Similarly, two of the hysteresis counters are used for keeping hysteresis information relative to continuous tone (CT) data in the Y direction. For the Y direction counters, there needs to be as many counters as there are PELs in a line. To minimize the number of counters, a plurality of Y direction counter serial memories identified as 66, 68, 70 and 72 are coupled over conductors 74, 76, 78 and 80 into the Y counters. In the preferred embodiment of the invention each serial memory is M PELs wide, with M equal to the number of PELs in a line. Also, conductors 74, 76 and 78 are four-bits wide while conductor 80 is one-bit wide. The output from each Y directional counter is fed back over conductor 82, 84, 86 and 88 into the input of the associated serial memory and over conductor 90, 92, 94 and 96 into the system controller 30. The system controller 30 generates a plurality of control signals identified as increment, decrement, set, and clear and feeds the signals over the associated one-bit line into the hysteresis counter control multiplexor (MPX) block 100. Similarly, a three-bit select signal is fed over the select line into the multiplexor box 100. Under the control of the select line, the hysteresis counter control multiplexor block 100 outputs control signals over multiplexor buss 102 into the hysteresis counter means 40. The signal selects the appropriate counter in accordance with the algorithm to be described hereinafter and either increments, decrements, sets or clears the contents of the counter.

Still referring to FIG. 1, another set of signals which are fed into the system controller 30 are the so-called parameter latches signals or machine state signals. The signals are generated by latches 104, 106, 108 and 110. The signals are fed over conductor 113, 114, 116 and 118 into the system controller. Each of the conductors are N bits wide. The data which is loaded in the latches is based upon a desired reflectance characteristic of the document to be scanned. As such, the information loaded in latch 104 is the so-called white level (WL) information. The information loaded in latch 106 is the black level (BL) information.
The information loaded into latch 108 is threshold level information.
The information loaded into latch 110 is gradient level information.
Loading of the switches is achieved over multiplexor buss 112 from a
plurality of switches (not shown) with each switch representing one of
the previously described parameters, or from a read-only memory (ROM)
under programming control. The function of the machine state latches is
to store predetermined data for improving the quality of reproduced
copies. By way of example, the machine state latch settings are somewhat
analogous to the contrast control setting associated with a conventional
convenience copier.

Still referring to FIG. 1, an enabling block 120 generates enabling
signals for driving the mode-switching device. By way of example, the
block generates the system clocks, timing control, Y-memory and counter
initializing signal, power on reset (POR) signal etc. The signals are
fed over multiplexor busses 122, 124, 126 and 128 for driving the system.

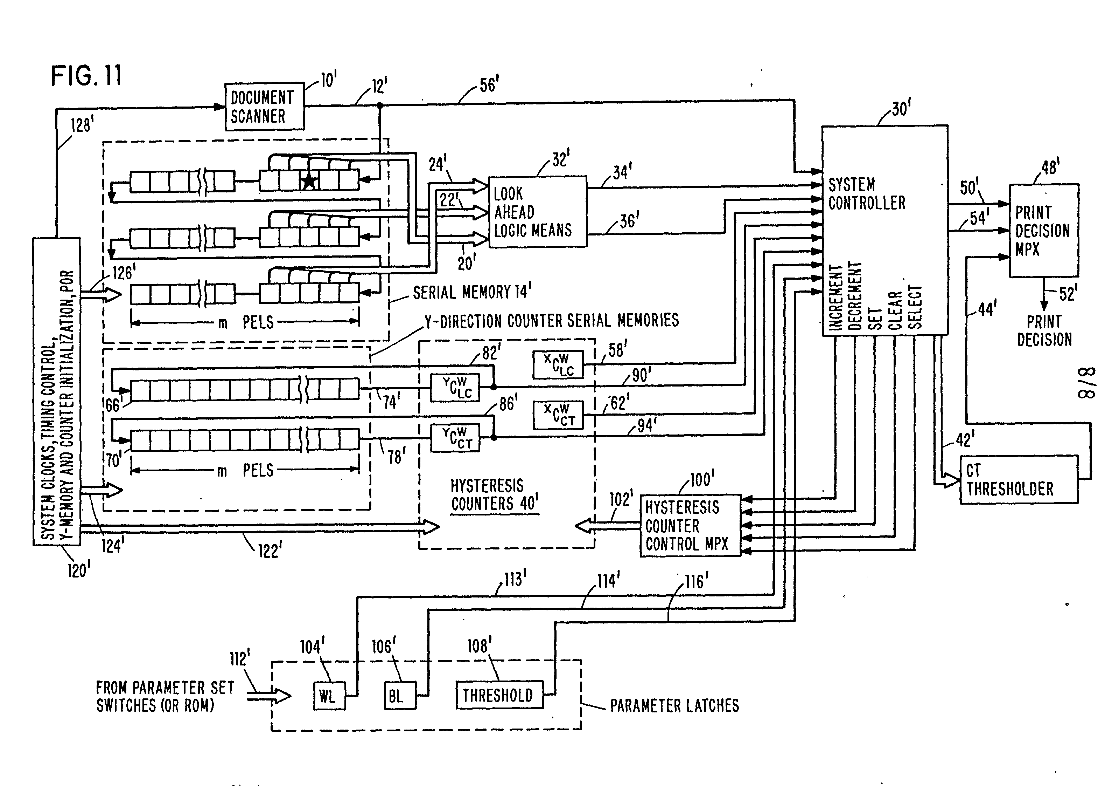

FIG. 11 shows, in block diagram form, another mode-switching device
according to the teaching of the present invention. The device scans a
mixed format document, selects an optimum thresholder for processing the
data, and generates print/no-print decisions for driving a bilevel
reproducing device such as an ink jet printer. The mode-switching
device includes a conventional document scanner 10'. The document
scanner is fitted with a transparent document platen upon which the
document to be reproduced is placed. The scanner further includes
illumination means, optical means and a plurality of photosensitive
elements. Each are coupled in a conventional or well-known manner and
will not be described in detail. Suffice it to say, each photosensitive
element outputs a video signal representative of an elementary piece of
information recorded on the document. The output from the photosensitive
element is referred to in the art as a picture element (PEL) or pixel.
The PELs representing the scan data are fed over conductor 12' into
storage means 14'. The conductor 12' includes a plurality of simplex
bit lines with each bit line carrying one bit of information. The bit
lines are configured so that N bit lines are needed to carry information for a single PEL (N bits/PEL). Although the storage means 14' may include a plurality of different types of prior art storage, in the preferred embodiment of this invention, the storage means is configured as a serial memory with three lines of storage. Each line stores M PELs. With this configuration, data which is outputted on conductor 12' is rippled through the various stages of the first line storage into the second line storage then into the third line storage. It should be noted that other types of configurations can be used without departing from the teaching and scope of the present invention.

Since each PEL is rippled through the shift register or serial memory stages at some point in time, every PEL outputted from the scanner will be a PEL of interest (identified by a "star" in FIG. 11). As such, every PEL outputted from the scanner is processed according to the teaching of the present invention.

A look-ahead logic means 32' is coupled over multiplexor busses 24', 22' and 20' to the storage means 14'. In the preferred embodiments of this invention, a three-by-three matrix is used to calculate the look-ahead information. Any other type of logic means may be used to generate the look-ahead information. The function of the look-ahead logic is to interrogate PELs following the PEL of interest and to generate a signal representative of the type of data. Turning to FIG. 6 for the moment, is a graphical representation of the method used to calculate the look-ahead information. For description purposes, assuming that the starred box is the PEL of interest, there are two types of look-ahead information: look-ahead black (LAB) and look-ahead white (LAW). LAB is true if any PEL in the 3x3 look-ahead matrix is greater than or equal to the white level threshold value (WL). LAW is true if any PEL in the look-ahead area is less than or equal to the black level threshold value (BL).

Turning now to FIG. 11, the look-ahead white (LAW) information is a one-bit signal outputted on conductor 34'. Similarly, the look-ahead black (LAB) information is a one-bit signal outputted on conductor 36'. The data on conductors 34' and 36' is fed into system controller 30'.

The function of system controller 30' is to correlate the signal outputted from the gradient logic means, the look-ahead logic means and the hysteresis counter 40' to select an optimum thresholder for processing the data outputted from the document scanner 10'. The correlation of signals is performed in accordance with a predetermined series of process steps or algorithm. The algorithm or series of process steps will be described shortly. It should be noted that information needed by the continuous tone thresholder (such as PEL gradient, gray value, etc.) is passed over buss 42' to the continuous tone thresholder (CT Thresholder). The continuous tone thresholder, in one embodiment, is a conventional thresholder of the matrix type, well known in the prior art, and therefore its detail will not be described here.

A one-bit line 44', is outputted from the thresholder into print decision multiplexor (MPX) block 48'. The function of the print decision multiplexor block 48' is to determine under the control of a one-bit select line 50', whether the data which is used as the one-bit print decision line 52' should be taken from conductor 44', 54'. The signal on conductor 54' is valid when the system controller 30' determines that a line copy thresholder (also called Text Type Thresholder) is to process the data. The gray scale value of data is also fed over conductor 56' into the system controller 30'.

The other set of signals which is used by the system controller 30' is the signal outputted from the hysteresis counters 40'. There are two sets of counters in the preferred embodiment of this invention. There is the X set of counters and the Y set of counters. The X set of counters stores hysteresis information relative to the X direction of processing. Likewise, the Y set of counters stores information relative to the Y direction of processing. It is worthwhile noting at this point, that the present invention is capable of handling mixed mode documents containing line copy (that is textural material) and/or continuous tone material (that is photographs). The output from each of the two X counters are fed over conductors 58' and 62' into system controller 30'.
The signal on conductors 58' and 62' is a four-bit hysteresis count.
The hysteresis counts the past history of the information being processed.

There are also two Y counters. The Y counters keep track of hysteresis
associated with scanned data in the Y direction. One of the counters is
used for keeping hysteresis information of line copy (LC) in the Y
direction. Similarly, one of the hysteresis counters is used for keeping
hysteresis information relative to continuous tone (CT) data in the Y
direction. For the Y direction counters, there needs to be as many
counters as there are PELs in a line. To minimize the number of counters,
a plurality of Y direction counter serial memories identified as 66' and
70' are coupled over conductors 74' and 78' into the Y counters. In the
preferred embodiment of the invention, each serial memory is M PELs
wide, with M equal to the number of PELs in a line. Also, conductors
74' and 78' are four-bits wide. The output from each Y directional
counter is fed back over conductor 82' and 86' into the input of the
associated serial memory and over conductor 90' and 94' into the system
controller 30'. The system controller 30' generates a plurality of
control signals identified as increment, decrement, set and clear and
feeds the signals over the associated one-bit line into the hysteresis
counter control multiplexor (MPX) block 100'. Similarly, a two-bit
select signal is fed over the select line into the multiplexor box 100'.
Under the control of the select line, the hysteresis counter control
multiplexor block 100' outputs control signals over multiplexor buss
102' into the hysteresis counter means 40'. The signal selects the
appropriate counter in accordance with the algorithm to be described
hereinafter and either increments, decrements, sets or clears the contents
of the counter.

Still referring to FIG. 11, another set of signals which are fed into
the system controller 30' are the so-called parameter latches signals or
machine state signals. The signals are generated by latches 104', 106'
and 108'. The signals are fed over conductor 113, 114 and 116 into the system controller. Each of the conductors are N bits wide. The data which is loaded in the latches is based upon a desired reflectance characteristic of the document to be scanned. As such, the information loaded in latch 104' is the so-called white level (WL) information. The information loaded in latch 106' is the black level (BL) information. The information loaded into latch 108' is threshold level information. Loading of the switches is achieved over multiplexor buss 112' from a plurality of switches (not shown) with each switch representing one of the previously described parameters, or from a read-only memory (ROM) under programming control. The function of the machine state latches is to store predetermined data for improving the quality of reproduced copies. By way of example, the machine state latch settings are somewhat analogous to the contrast control setting associated with a conventional convenience copier.

Still referring to FIG. 11, an enabling block 120' generates enabling signals for driving the mode-switching device. By way of example, the block generates the system clocks, timing control, Y-memory and counter initializing signal, power on reset( POR) signal, etc. The signals are fed over multiplexor busses 122', 124', 126' and 128' for driving the system.

Before describing the flowchart used by system controller 30 to correlate the previously described input signal, a table explaining the various symbols used in FIGS. 1 and 11 and in the flowcharts will be given.

- 17 -

## TABLE 1

| LEGEND | INTERPRETATION |
| --- | --- |
| G | PEL gray or "video" value |
| WL | White level threshold value |
| BL | Black level threshold value |
| PD | Print decision (1=print; 0=no-print) |
| C | Counter |
| $^x c^w_{LC}$ | x,white,line copy counter, etc. |
| w | white |
| b | black |
| LC | line copy |
| CT | continuous tone |
| x | x direction |
| y | y direction |

As is obvious from the above table, G means the gray scale value of the PEL or video value. Similarly, WL means white level threshold value. Also, BL means black level threshold value. Likewise, $^x c^w_{LC}$ means line copy white hysteresis counter. Stated another way, this means the counter is used for storing white line copy hysteresis information in the X direction.

Before describing the process steps used in system controller 30' (FIG. 11) and system controller 30 (FIG. 1), the basic principles upon which these process steps are built will be described.

As will be seen from the description to follow, the present invention makes use of both gradient, level information, combined with a prior information as to the observed nature of text and continuous tone material to select an optimum thresholder for processing documents having mixed formats. It does so preferably on a local basis without requiring preprocessing of an entire document. To this end, a set of conditions are set for determining, on a local basis, whether the input material from the document is text or continuous tone. Text is characterized by high frequency edge transitions and complete transition from white to black and vice versa in both the X and Y directions. Continuous tone material is characterized by a very high percentage of low frequency transitions relative to high frequency transitions and a large area compared to commonly printed sizes of text.

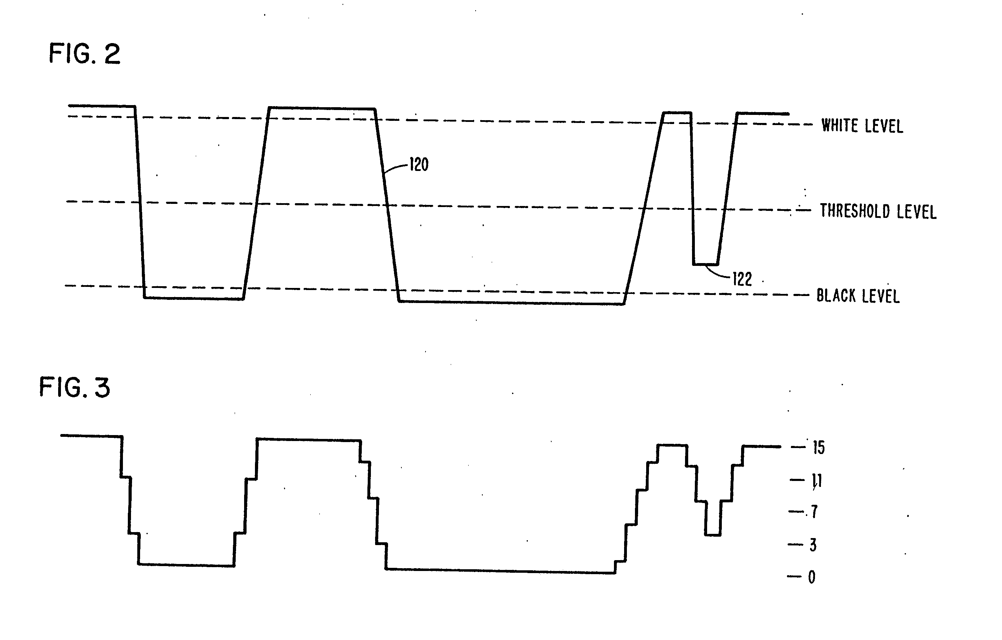

Turning now to FIGS. 2 and 3, a graphic representation of the electrical signals representative of line copy is shown. The showing is helpful in understanding the conditions or characteristics which are used by the invention to detect line copy and to protect the gray scale dynamic range on the black end. FIG. 2 shows a scanned line of a portion of a word while FIG. 3 shows the video values for the scan of the same word. As is shown in FIG. 3, the dynamic gray scale range is between 0 and 15. Of course any other gray scale range can be used without departing from the scope of the present invention. As was stated previously, in order to reproduce a document, the video values are thresholded against a thresholder to determine the range within which it falls and then to make a print or no-print decision which is used to drive a bilevel printer such as an ink jet printer. The various levels which are associated with video data is shown in FIG. 2. The level defined in FIG. 2 relative to the signal graph 120 is the black level, the threshold level and the white level. As is seen in the figure, the threshold level is approximately midway between the white and the black level, respectively.

Turning to FIG. 4 for the moment is a page of a document which is placed on the document glass to be scanned. The drawing is helpful in understanding the order in which a document is scanned and processed by the system according to the present invention. As is shown in the drawing, the document has a top, bottom, left and right side. The information contents of the document is relatively large size line copy. The direction of scan is top to bottom, while direction of processing is left to right. Although the showing in FIG. 4 is directed to line copy only, the system will handle documents including continuous tone such as photographs. By empirical means, it has been determined that the following conditions are applicable for line copy (text) information.

1) For large text, a transition of electrical signals from a predetermined white level to a predetermined black level or vice versa in N PELs is indicative of text. N usually varies from 0 to 10 PELs. If the document data is processed from left to right as is shown in FIG. 4, and top to bottom, such a transition should be recorded preferably from both X and Y directions to be called text. The transition region and a border of PELs above the white level (white is high) and below the black level (black is low) are considered text if these conditions are met.

2) Large solid areas in text -- if the video value of the PEL is below the black level and the conditions in (1) have been previously met, to the left and above, a flag is set and the input is considered line copy until the next transition region in which this decision can be overridden.

3) Background -- if the video value is above the white level for P PELs, either or both directions, regardless of previous history, the line copy condition is reset. This condition can be modified to further protect white dynamic range.

4) Small or light text -- sometimes small text and typewritten text will not take the full transition from black level to white level depending on the modulation transfer function of the scanner and/or the quality of the original. By way of example, the point identified by 122 in FIG. 2, is an example where full transition is not achieved. If the transition from WL to BL is closely followed spacially by transition from BL to WL this can be designated as text without causing serious overshoot in detailed areas of the continuous tone. In fact, the sharpness of the text may be improved. By analyzing the video signal generated by the scanner in accordance with the above set of conditions, the docume. t reproduced, according to the

- 20 -

teaching of the present invention, is significantly improved in
quality than was heretofore possible.

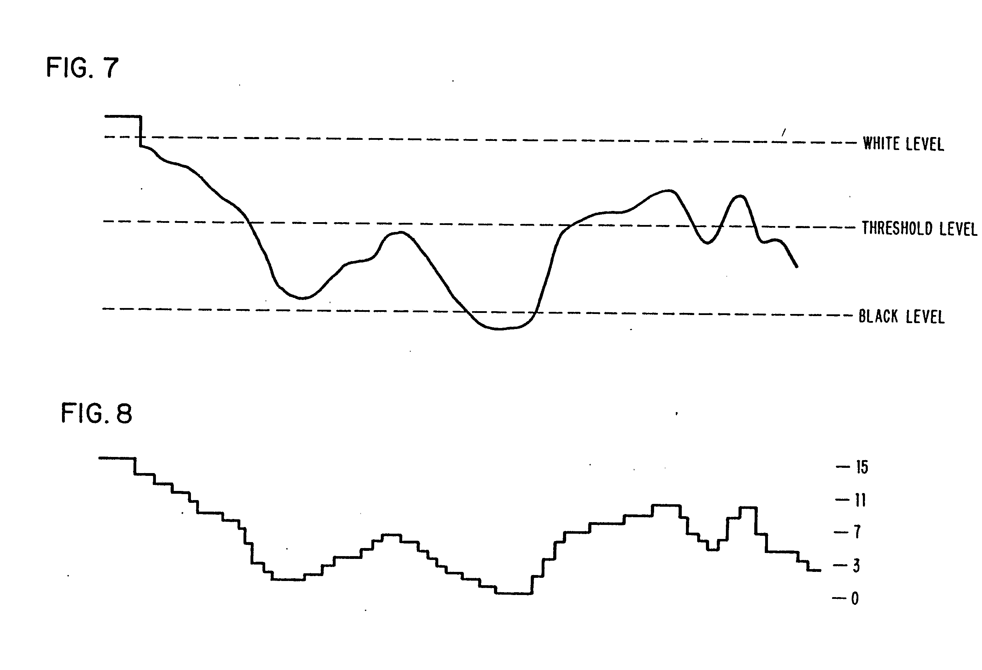

FIGS. 7 and 8 show graphical representation for continuous tone documents.
FIG. 7 shows representation for a scan line of a continuous tone document,
while FIG. 8 shows a digitized video value. As with line copies, the
continuous tone document is thresholded against a gray scale dynamic
range of 0 through 15 (FIG. 8). Also the levels of interest are the
black level, the threshold level and the white level. The area between
the white and black level is the area of indecision. For continuous
tone documents, any indecision region which does not meet one of the
combinations of 1-4 above is considered continuous tone. For example,
if the video values remain in the midregion between the black level and
the white level for more than N PELs, the continuous tone condition will
be met. PELs below the black level for which (1) has not been met are
continuous tone. PELs above the white level and within P PELs in either
( or both) X and Y directions of midrange continuous tone (CT) decision
will be considered continuous tone. The above conditions will provide
maximum protection to text. The conditions will allow full dynamic
range on the black and in continuous tone reproductions for a significant
percentage of documents, and some minimum protection of the white end.
Indications of continuous tone from the right and bottom of the document
will not affect decision to the left and top. It is obvious that the
balance between line copy and continuous tone protection can be shifted
more towards the latter by changing the priorities and overriding the
line copy more easily.

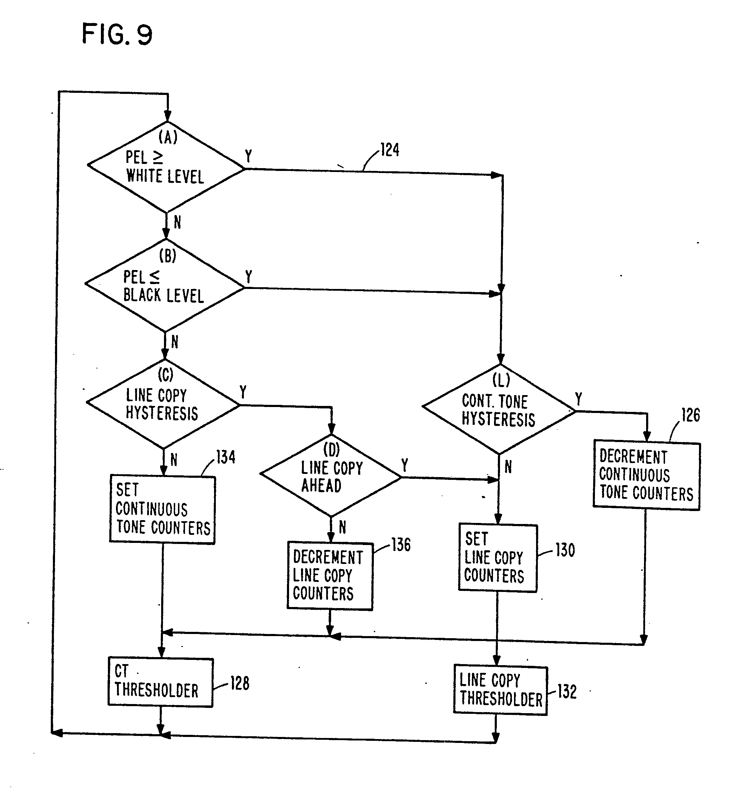

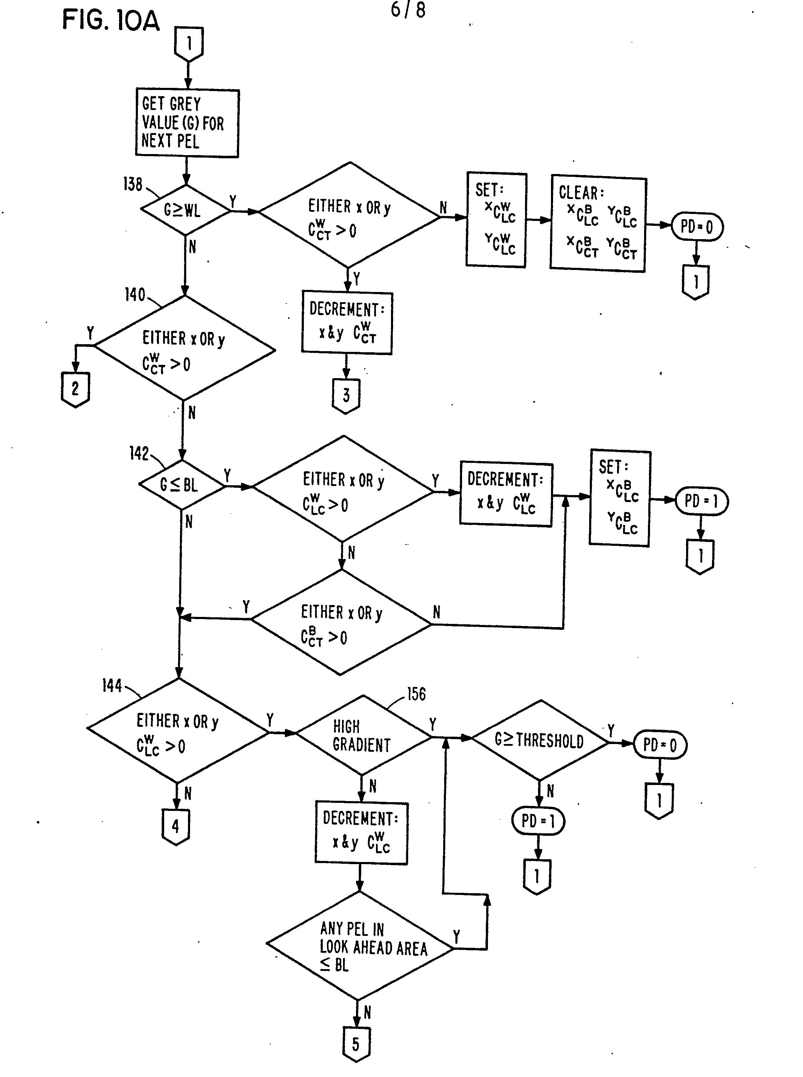

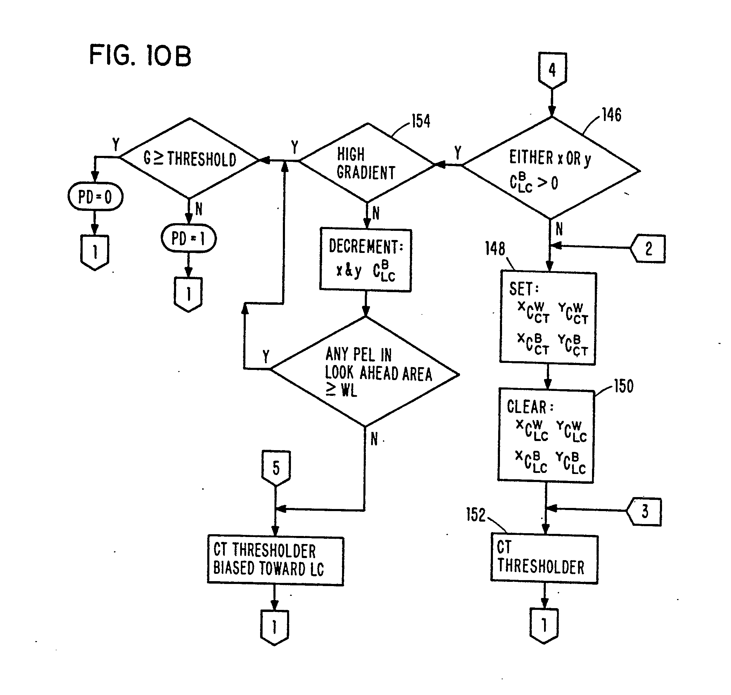

Referring now to FIGS. 9 and 10 are flowcharts showing process steps
which must be followed for the system according to the present invention,
to process mixed documents. The showing in FIG. 9 is a simplified
embodiment. FIG. 10 is a more complex detailed embodiment. As was
stated previously, these flowcharts would be implemented in system
controllers 30' and 30 respectively. As such, a conventional microprocessor
or programmable logic array, or discrete logic could be implemented in
the system controller to perform the functions shown in the flowcharts 9 and 10, respectively. In FIG. 9, the first block is a connector block through which the PEL of interest enters into decisional block A. In block A, the PEL is tested to see if it is greater than or equal to the white level (see FIGS. 7 and 8). If the PEL is white, the logic exits the decisional block along path 124 into decisional block L. In decisional block L, the system tests to see if there is continuous (CONT) tone hysteresis. The continuous tone hysteresis means a history of continuous tone in either the X or Y directions within some given number of PELs. In the preferred embodiment of this invention, the number of PELs are 10. It should be noted that the hysteresis information would be obtained from the contents of the hysteresis counters (FIG. 11). If there was a history of continuous tone in either X or Y, the program enters function block 126 and decrements the X and Y continuous tone counters. The program then exits from function block 126 and goes to function block 128, the continuous tone thresholder. One embodiment of block 128 is a matrix thresholder. Other embodiments may be used. From decisional block 128, the program loops to fetch another PEL.

If the decision from decisional block A was no instead of yes, then the program enters decisional block B. In decisional block B, the PEL is tested to see if it is less than or equal to the black level. If the result is yes, the program enters continuous tone hysteresis decision block L. If there is continuous tone hysteresis in either X or Y, then the program traverses the path already described through functional blocks 126 and 128, respectively, to fetch another PEL. Assuming that there was no continuous tone hysteresis in both X and Y, then the program exits decisional block L into functional block 130. In block 130, the program sets the X and Y line copy counters and exits the block into functional block 132. In block 132 the PEL is thresholded against a line copy thresholder. Usually, the line copy thresholder is a simple level thresholder. With reference to FIGS. 7 and 8, the threshold level would be selected to be probably eight, midway between the white and the black. PELs falling below the theshold level eight would probably be thresholded as black, that is a print and those above threshold level be reproduced as no-print white.

From functional block 132, the program exits to fetch another PEL. If the decision from decisional block B was no, (that is the PEL is not black and probably gray), the program then enters decisional block C. In block C the program tests to see if there is line copy hysteresis. If there is no line copy hysteresis in either X or Y, the program then exits the block into functional block 134. In block 134, the program sets both X and Y continuous tone counters. It should be noted that the decrement function which occurs in block 126, would be to decrement the counters which are set by block 134. From block 134, the program then enters block 128 performing the function previously described.

If the decision from decisional block C was yes, then the program would enter decisional block D. In decisional block D, the program tests to see if there is line copy ahead, that is, if either LAB or LAW is true. If there is line copy ahead, then the program exits decisional block D over functional block 130, 132, etc. The path including these blocks have already been described and will not be repeated. If the decision from decisional block D is no, then the program exits the block into functional block 136. In block 136 the line copy counters which were previously set by block 130 are decremented and the program exits the block through decisional block 128, etc.

In summary, the algorithm is structured so that it fetches the gray scale value for a PEL of interest. The PEL is tested to see if it is white or black. If it is neither white nor black, and there is no line copy hysteresis, then the program sets one or more continuous tone counters and the PEL is processed using a thresholder for processing continuous tone.

If the PEL is neither white nor black, and there is line copy hysteresis, the program looks ahead to see if the following data is line copy.

If the look-ahead data is not line copy, the line copy counter is decremented and the continuous tone thresholder is used for reproducing the data.

If the look-ahead data ahead is line copy, the line copy counter is set and a line copy thresholder is used.

If the PEL that was fetched is above the white level and there is continuous tone hysteresis, the continuous tone counter is decremented and the continuous tone thresholder is used to process the data.

If there is no continuous tone hysteresis, the line copy counter is set and the line copy thresholder is used to threshold the data.

If the PEL is below the black level and there is no continuous tone hysteresis, the line copy counter is set and the line copy thresholder is used to threshold the data.

If the PEL is below the black level and there is continuous tone hysteresis, the continuous tone counter is decremented and the continuous tone thresholder is used to threshold the data.

Referring now to FIGS. 10A and 10B, an alternate set of process steps can be implemented within the system controller 30 to print documents having mixed formats. The showing in FIGS. 10A and 10B is more detailed than the flowchart in FIG. 9. Also, there is a continuous tone (CT) thresholder block which is biased towards line copy (LC). Also, the line copy threshold decision is generated from a plurality of points. Each of the points are identified by an elliptical symbol. The enter and exit blocks are identified by five-sided spike-like symbols. The diamond shape boxes represent decisional blocks and the rectangular shape boxes represent the functional blocks. The interconnecting lines show the functional path followed by the program as it ingresses and egresses a box. In operation, the program gets the gray scale value (G) for a PEL of interest. The PEL is tested in functional block 138 to see if it is greater than or equal to the white level (WL). If it is less than the white level, then the program enters decisional block 140. In decisional block 140, the program tests to see if the X or Y white continuous tone counter is greater than 0, $C_{CT}^{X \text{ or } Y}$ greater than 0. If it is not, the program then enters decisional block 142. In decisional block 142, the PEL is tested to see if it is less than or equal to the black level (BL). If it is not, the program then enters decisional block 144. There the program tests to see if either the X or Y white line copy counter is greater than 0. If it is not, the program enters decisional block 146 where it tests to see if either the X or Y black line copy counter is greater than 0. If it is not, the program then enters function block 148. In block 148 the program sets all four continuous tone counters. The program then enters decisional block 150 where it clears all four line copy counters and then enters decisional block 152 where the PEL is processed by the continuous tone thresholder. Since the other branches of the flowchart are self-explanatory from the figure and in view of the above description, they will not be described in detail. Suffice it to say that in decisional blocks 154 and 156 respectively, the program tests to see if the gradient for the PEL of interest is greater than the gradient which was set in parameter latch 110 of FIG. 1.

In addition to the conditions which have been discussed previously, which assure maintenance of quality print for continuous tone and line copy, a further protection of the continuous tone on the white end of the dynamic range and an increase in the percentage of cases covered on the black end can be achieved if the following conditions are followed:

(a) Instead of processing the data for an entire document left to right (see FIG. 4) the processing is alternated from left to right and from right to left on each succeeding line. The processing from the previous line is used to allow override of the line copy mode from the right as well as from the top and/or left for the black end of the dynamic range. For the white end of the dynamic range, a line of history counters is used to determine a region of continuous tone from above connecting continuous tone on the left and right when a region above the white level separates the two. The line copy decision is overridden if continuous tone is present in both the previous PEL within the line <u>and</u> in the Y direction above. The alternate line processing prevents propagation into true background areas.

(b)    The quality of print is further improved if each line is processed twice in the sequence; once from left to right and once from right to left and the decisions are combined appropriately for maximum separation of continuous tone and line copy material. Finally, if the whole page is processed from top to bottom and from bottom to top and the decision process is appropriately combined, maximum protection of continuous tone and line copy will be provided from all four directions.

## OPERATION

In operation a document to be scanned is positioned upon the document glass of document scanner 10 (FIG. 1). The document may contain mixed formats or a single format. In the first instance, it is assumed that the machine is being used for the first time. As such, there is no prior information stored in any of the counters. The system then assumes that it is in a line copy mode and for the first set of PELs processed, the line copy thresholder is used for making the print/no-print decision. As the PELs are processed, the system controller 30 uses the process steps described in FIG. 9 and/or 10 to determine the characteristics of the data. If the test confirms that the system is processing line copy information, the line copy counter/counters are set. The counters are set with a number characteristic of line copy information. These characteristics/conditions are described above. As more PELs are processed, whenever the system decides that a PEL is one of indecision (that is neither white nor black), the counter is decremented. The process continues, that is decrementing the counter and PELs of indecision, until the contents of the counter is zero. At this point the system switches from the line copy thresholder to the continuous tone thresholder. In a similar manner, the continuous tone counters are set and decrement in a similar fashion. As such, a mixed format document is processed with an optimum thresholder to reproduce a quality document without intervention of an operator.

Hereinbefore there has been described apparatus for reproducing an original represented by a serial stream of digital data, each item of data having a PEL value corresponding to the value of a surface characteristic (e.g. reflectance) of the elemental area (PEL) of the original represented by the item of data, said apparatus being capable of operating in more than one mode to produce copies of different or mixed nature (e.g. half-tone, line or printed) originals and comprising buffer means for receiving and buffering the serial stream of data; means for comparing the value of each item of data with first and second threshold values and operable to generate contrast signals indicative of whether the item value is greater than the first threshold value, between the threshold levels or below the second threshold value; gradient means connected to receive the PEL values stored in a first group of buffer positions and operable to generate for each first group a gradient value signal which is associated with the PEL value occupying a particular location in the first group; means for comparing the generated gradient values with a predetermined datum gradient value and operable to generate transition signals indicative of whether the generated gradient value is greater or less than the predetermined datum gradient value; and controller means, connected to receive the stream of digital data together with the transition signals, for selecting the operational mode of the apparatus, said apparatus being characterised by further comprising look ahead means connected to receive the PEL values stored in a second group of buffer positions and operable to generate a selection signal for each group indicative of whether any PEL value in the group lies in the band of values between the first and second threshold values or outside that band, each selection signal being associated with the PEL value occupying a particular location in the second group, being supplied to the controller means, and being used by the controller means in selecting the operational mode of the apparatus.

Hereinbefore there has also been described a thresholding mode-switching device for automatically selecting an optimum operational mode for printing copies of documents having a mixed format, said mode-switching device comprising: scanning means operable to generate a stream of pixels representative of the informational contents of a document; input buffer means operable to store a predetermined number of pixels; gradient means coupled to the buffer means and operable to generate gradient signals representative of the gradient associated with a pixel of interest; look-ahead logic means operable to interrogate pixels displaced relative to the pixel of interest and to output look-ahead signals representative of the reflectance characteristics of the pixels; hysteresis means operable to generate signals representative of the prior type of data; means operable to store predetermined signals representing a desired reflectance characteristic of a document; and a controller means operable to correlate the signals and to generate a print/no-print signal.

Hereinbefore there has also further been described a thresholding mode-switching device for automatically selecting an optimum operational mode for printing copies of documents having a mixed format, said mode-switching device comprising: scanning means operable to generate a stream of pixels representative of the informational contents of a document; input buffer means operable to store a predetermined number of pixels; look-ahead logic means operable to interrogate pixels displaced relative to the pixel of interest and to output look-ahead signals representative of the reflectance characteristics of the pixels; hysteresis means operable to generate signals representative of the prior type of data; means operable to store predetermined signals representing a desired reflectance characteristic of a document; and a controller means operable to correlate the signals and to generate a print/no-print signal.

Hereinbefore there has furthermore been described a document reproduction device wherein a document is being scanned, thresholded and reproduced, an improved thresholder for processing and printing documents having a continuous tone format or a line copy format comprising: means for buffering a stream of video pixels representative of the information contents of the document; means for generating a look-ahead signal representative of the reflectance characteristic of PELs following the PEL of interest; means for storing level information signals representative of the document quality to be reproduced; and control means for correlating the signals and selecting an optimum thresholder for processing text or continuous tone.

Although the invention has been particularly shown and described with reference to a preferred embodiment thereof, it will be understood by those skilled in the art that various changes in form and details may be made therein without departing from the scope of the invention.

- 29 -

## CLAIMS

1.   A method of reproducing an original represented by a serial stream
of digital data, each item of data having a PEL value corresponding to
the value of a surface charactersitic (e.g. reflectance) of the elemental
area (PEL) of the original represented by the item of data, said method
comprising selecting items of data having grey PEL values between predetermined
white and black threshold values and being characterised by determining,
at least for each selected item of data, whether any item of data in a
group of items of data corresponding to a group of elemental areas
( PEL's) of the original contiguous with the elemental area (PEL) corresponding
to the selected item of data, has a PEL value other than a grey PEL
value, and if so, operating the apparatus according to a first algorithm
and, if not, operating the apparatus according to a second algorithm.

2.   A method as claimed in claim 1, further characterised by operating
the apparatus according to a third algorithm for items of data not
selected and having PEL values not between the white and black threshold
values.

3.   A method as claimed in claim 1 or 2, further characterised in that
the third alogirthm is a line copy algorithm, the second algorithm is
a continuous tone copy algorithm and the first algorithm is a biased
continuous tone copy algorithm.

4.   Apparatus for reproducing an original represented by a serial
stream of digitial data, each item of data having a PEL value corresponding
to the value of a surface characteristic (e.g. reflectance) of the
elemental area (PEL) of the original represented by the item of data,
said apparatus being capable of operating in more than one mode to
produce copies of different or mixed nature (e.g. half tone, line or
printed) originals and comprising buffer means for receiving and buffering
the serial stream of data; means for comparing the value of each item of
data with first and second threshold values and operable to generate
contrast signals indicative of whether the PEL value is greater than the first threshold value, between the threshold values, or below the second threshold value; first means effective in operation to cause the apparatus to operate in a first mode according to a first algorithm; second means effective in operation to cause the apparatus to operate in a second mode according to a second algorithm; and selection means, connected to receive the contrast signals, and operative selectively to render the first or second means operative, said apparatus being characterised by further comprising look ahead means connected to receive the PEL values successively stored in a first group of buffer positions and operative to generate a succession of selection signals indicative of whether any PEL value in each group lies in the band of values between the first and second threshold values or outside that band, each selection signal being associated with the PEL value occupying a particular location in the first group, being supplied to the selection means and being used by the selection means in selecting the operational mode of the apparatus.

5.   Apparatus as claimed in claim 4, further characterised by comprising hysteresis means operable to generate and store hysteresis signals representative of preceeding operational mode and/or preceeding PEL values.

6.   Apparatus as claimed in claim 5, further characterised in that the hysteresis means comprise a first x-counter and a first y-counter associated with a first mode of operation of the apparatus, a first predetermined value being set in the counters in response to detection by the apparatus of a first predetermined data sequence in the incoming stream of data and the values in the first counters being decremented in response to detection of a subsequent second predetermined data sequence in the incoming stream of data.

7.   Apparatus as claimed in claim 6, further characterised in that the hysteresis means further comprise a second x-counter and a second y-counter associated with a second mode of operation of the apparatus, a second predetermined value being set in the second counters in response to detection by the apparatus of a third predetermined data sequence in the incoming stream of data and the values in the second counters being decremented in response to detections of a subsequent fourth predetermined data sequence in the incoming data sequence.

8.   Apparatus as claimed in claim 6 or 7, in which the stream of incoming data is generated by scanning the original in the y-direction, further characterised in that each y-counter has an associated serial storage shift register having a number of stages equal to the number of PEL's in the y-scan direction of the original.

9.   Apparatus as claimed in any one of claims 4 to 8, further characterised by comprising gradient means connected to receive the PEL values stored in a second group of buffer positions and operative to generate for each second group a gradient signal, the gradient signal being associated with the particular PEL value occupying a predetermined buffer location in the second group and having a value dependent on the rate of change of the surface characteristic in a region of the original contiguous to the PEL corresponding to the particular PEL value; means for comparing the value of each generated gradient signal with a predetermined datum gradient value and operable to generate transition signals indicative of whether the value of each generated gradient signal is greater or smaller than the datum gradient value, said transition signals being supplied to the selection means and being used by the selection means in selecting the operational mode of the apparatus.

10.   A method of reproducing an original represented by a serial stream of digital data, each item of data having a value corresponding to the value of a surface characteristic (e.g. reflectance) of the elemental area (PEL) of the original represented by the item of data, said method comprising selecting items of data having grey values between predetermined white and black threshold values; determining, at least for each selected grey valued item of data, a gradient value dependent on the rate of change of the surface characteristic in a region of the original contiguous to the PEL corresponding to the item of data; comparing each determined gradient value with a predetermined gradient value; and using the result of the comparison in the selection of an operational mode, from a plurality of operational modes, for reproducing the original, and said method being characterised in that, when the determined gradient value for a subject item of data bears a first predetermined relationship to the predetermined gradient value, the operational mode is further selected by determining whether the values of all the items of data corresponding to elemental areas of the original in a predetermined area contiguous with the subject elemental area lie in the range between the predetermined white and black threshold values or whether any item of that data has a value outside that range, and selecting one or other of two alternative operational modes according to the result of the determination.

11. Apparatus for reproducing an original represented by a serial stream of digital data, each item of data having a PEL value corresponding to the value of a surface characteristic (e.g. reflectance) of the elemental area (PEL) of the original represented by the item of data, said apparatus being capable of operating in more than one mode to produce copies of different or mixed nature (e.g. half tone, line or printed) originals and comprising buffer means for receiving and buffering the serial stream of data; means for comparing the value of each item of data with first and second threshold values and operable to generate contrast signals indicative of whether the item value is greater than the first threshold value, between the threshold levels or below the second threshold value; gradient means connected to receive the PEL values stored in a first group of buffer positions and operable to generate for each first group a gradient value signal which is associated with the PEL value occupying a particular location in the first group; means for comparing the generated gradient values with a predetermined datum gradient value and operable to generate transition signals indicative of whether the generated gradient value is greater or less than the predetermined datum gradient value; and controller means, connected to receive the stream of digital data together with the transition signals, for selecting the operational mode of the apparatus, said apparatus being characterised by further comprising look ahead means connected to receive the PEL values stored in a second group of buffer positions and operable to generate a selection signal for each group indicative of whether any PEL value in the group lies in the band of values between the first and second threshold values or outside that band, each selection signal being associated with the PEL value occupying a particular location in the second group, being supplied to the controller means, and being used by the controller means in selecting the operational mode of the apparatus.

12. A thresholding mode-switching device for automatically selecting an optimum operational mode for printing copies of documents having a mixed format, said mode-switching device comprising:

scanning means operable to generate a stream of pixels representative of the informational contents of a document;

input buffer means operable to store a predetermined number of pixels;

gradient means coupled to the buffer means and operable to generate gradient signals representative of the gradient associated with a pixel of interest;

look-ahead logic means operable to interrogate pixels displaced relative to the pixel of interest and to output look-ahead signals representative of the reflectance characteristics of the pixels;

hysteresis means operable to generate signals representative of the prior type of data;

means operable to store predetermined signals representing a desired reflectance characteristic of a document; and

a controller means operable to correlate the signals and to generate a print/no-print signal.

13. A thresholding mode-switching device for automatically selecting an optimum operational mode for printing copies of documents having a mixed format, said mode-switching device comprising:

scanning means operable to generate a stream of pixels representative of the informational contents of a document;

input buffer means operable to store a predetermined number of pixels;

look-ahead logic means operable to interrogate pixels displaced relative to the pixel of interest and to output look-ahead signals representative of the reflectance characteristics of the pixels;

hysteresis means operable to generate signals representative of the prior type of data;

means operable to store predetermined signals representing a desired reflectance characteristic of a document; and

a controller means operable to correlate the signals and to generate a print/no-print signal.

14. A device as claimed in claim 13, wherein the hysteresis means includes: a first set of counters operable for storing a plurality of counts representative of hysteresis in the X-direction; a second set of counters operable for storing a plurality of counts representative of hysteresis in the Y-direction; and a set of serial memories coupled to the second set of counters.

15. In a document reproduction device wherein a document is being scanned, thresholded and reproduced, an improved thresholder for processing and printing documents having a continuous tone format or a line copy format comprising: means for buffering a stream of video pixels representative of the information contents of the document; means for generating a look-ahead signal representative of the reflectance characteristic of PELs following the PEL of interest; means for storing level information signals representative of the document quality to be reproduced; and control means for correlating the signals and selecting an optimum thresholder for processing text or continuous tone.

16. Method for processing and printing a mixed format document, said method comprising the following steps:

a)   generating a stream of digital signals indicative of PELs representing the informational contents of said document;

b)   selecting one of a plurality of thresholders for processing the digital signals;

c)   setting a predetermined count within a counting means;

d)   using the thresholder of step b) for generating "print/no-print" decision for the data of step a);

e)   decrementing the predetermined count on a PEL of indecision;

f)   repeating steps d)-e) until the count is zero; and

g)   switching from the present thresholder to another one of the plurality of thresholders.

FIG. 1

FIG. 2

- WHITE LEVEL
- THRESHOLD LEVEL
- BLACK LEVEL

120

122

FIG. 3

- 15
- 11
- 7
- 3
- 0

FIG. 4

TOP

A B C D

LEFT RIGHT

BOTTOM

↓ DIRECTION OF SCAN
(Y DIRECTION)

→ DIRECTION OF LINE PROCESSING
(X DIRECTION)

FIG. 5

FIG. 6

## FIG. 7

- - - WHITE LEVEL

- - - THRESHOLD LEVEL

- - - BLACK LEVEL

## FIG. 8

— 15
— 11
— 7
— 3
— 0

0055834

FIG. 9

0055834

FIG. 10A

GET GREY VALUE (G) FOR NEXT PEL

138 · $G \geq WL$

EITHER x OR y $C_{CT}^W > 0$

SET: $x C_{LC}^W$ $y C_{LC}^W$

CLEAR: $x C_{LC}^B$ $y C_{LC}^B$ $x C_{CT}^B$ $y C_{CT}^B$

PD = 0

1

DECREMENT: x & y $C_{CT}^W$

3

140 · EITHER x OR y $C_{CT}^W > 0$

2

142 · $G \leq BL$

EITHER x OR y $C_{LC}^W > 0$

DECREMENT: x & y $C_{LC}^W$

SET: $x C_{LC}^B$ $y C_{LC}^B$

PD = 1

1

EITHER x OR y $C_{CT}^B > 0$

144 · EITHER x OR y $C_{LC}^W > 0$

156 · HIGH GRADIENT

$G \geq THRESHOLD$

PD = 0

1

4

DECREMENT: x & y $C_{LC}^W$

PD = 1

1

ANY PEL IN LOOK AHEAD AREA $\leq BL$

5

FIG. 10B

$G \geq$ THRESHOLD

Y → PD = 0 → 1

N → PD = 1 → 1

HIGH GRADIENT — 154

Y

N → DECREMENT: x & y $C_{LC}^B$

ANY PEL IN LOOK AHEAD AREA $\geq$ WL

Y

N

5 → CT THRESHOLDER BIASED TOWARD LC → 1

4

EITHER x OR y $C_{LC}^B > 0$ — 146

Y

N → 2

SET: $x C_{CT}^W \quad Y C_{CT}^W$ $x C_{CT}^B \quad Y C_{CT}^B$ — 148

CLEAR: $x C_{LC}^W \quad Y C_{LC}^W$ $x C_{LC}^B \quad Y C_{LC}^B$ — 150

3

152 — CT THRESHOLDER → 1

FIG. 11

0055834